# EUROPEAN PATENT SPECIFICATION

(11) **EP 0 499 614 B1**
(45) Date of publication and mention of the grant of the patent: **13.07.1994**
(21) Application number: 90916714.0
(22) Date of filing: 07.11.1990
(51) Int. Cl.: A23C 15/16, A01J 15/12

(54) **A PROCESS FOR THE PRODUCTION OF LOW FAT BUTTER AND AN ASSEMBLY TO BE USED WHEN CARRYING OUT SAID PROCESS**
VERFAHREN ZUR HERSTELLUNG VON FETTARMER BUTTER UND ZUR DURCHFÜHRUNG DES VERFAHRENS BENUTZTE VORRICHTUNG
PROCEDE DE PRODUCTION DE BEURRE A FAIBLE TENEUR EN MATIERE GRASSE ET ENSEMBLE UTILISE LORS DE LA MISE EN OEUVRE DUDIT PROCEDE

(30) Priority: 08.11.1989 DK 5579/89
(43) Date of publication of application: 26.08.1992
(73) Proprietor: APV PASILAC A/S, 8100 Arhus C (DK)
(72) Inventor: NORGAARD PEDERSEN, Ernst, DK-8600 Silkeborg (DK); DUEHOLM, Kaj, DK-8600 Silkeborg (DK)
(74) Representative: Jeppesen, Finn Heiden
(86) International application number: DK9000284
(87) International publication number: WO9107098

(56) References cited:
- EP-A- 0 098 664
- EP-A- 0 297 690
- EP-A- 0 385 541
- GB-A- 1 450 296
- GB-A- 1 525 315
- Dialog Information Service, File 53: Cab Abstracts 1972-1983, accession no. 0723686, CAB accession no. 0D040-03891, Gennip, A.H.M. van: "Einsatzmöglichkeiten von Milcheiweiss", & Deutsche Molkerei-Zeitung 1978, 99(6), 176-180
- Dialog Information Service, File 50: CAB Abstracts 1984-90/DEC, accession no. 0928246, CAB accession no. 0D052-008822, Tverdokhleb, G.V. et al.: "Biological value and consumer acceptability of new types of butter spread", & Molochnaya Promyshlennost, 1986, (No. 10), 27-28
- Dialog Information Service, File 53: CAB Abstracts 1972-1983, accession no. 1492468, CAB accession no. 0D045-06965, Stevonkova, E. et al.: "Technology of production of butter spread", & Zbornik Prao Vyskumneho Ustavu Mliekarskeho v Ziline 1982, 1979/1980, 33-40

## Description

### Technical Field

The invention relates to a process for the production of butter with a low fat content on the basis of ordinary butter preferably having a fat content of 80-83% and prepared exclusively on the basis of milk. The invention further relates to an assembly to be used when carrying out said process.

### Background Art

Processes of the above type are known, said processes dealing with the production of butter with a low fat content, so-called low fat butter, by means of a batch production in which exclusively milk based constituents and optionally common salt are added. The finished low fat butter product therefore has a good taste but is not homogenous and has a "lack-lustre" surface among other things because the air content of the butter product is not below 6-7%. The butter therefore has a poor "spreadability" and a "margarine-like" appearance which does not appeal to the consumer. The high air content of the butter results in a poorer spreadability and the butter turns brittle. The high water content (normally around 50% for low fat butter) often results in the water not being bound in sufficiently small particles in the butter and in free water often appearing on the surface of the butter. In connection with the high air content of the butter this leads to a short shelf life of the butter at refrigerator temperature, 5-8°C, often only a third of the life of normal butter of 3 to 4 weeks. It is further a serious drawback that the production cannot take place continuously.

By another process by which the low fat butter is produced continuously, non-milk based additives, such as stabilizers and emulsifiers are added to the butter, thereby improving the homogeneity and shelf life a little. However, this low fat butter product has a substantially poorer taste than the above and especially a "margarine-like" appearance which is often not acceptable to the consumer. Furthermore the consumer prefers a product produced without additives requiring declaration.

Among other processes for the production of low fat butter the processes known from the margarine industry may also be mentioned, in which the end product is produced continuously by phase inversion of cream or skimmed milk (with vegetable oils added) to a water-in-oil emulsion wherein the fat and the oil form a coherent network which contains both enclosed and free aqueous phase. These low fat butter products have a very poor taste and spreadability and are characterised by the typical "lack-lustre" appearance of margarine which is unacceptable to the consumer.

### Disclosure of Invention

It is the object of the present invention to provide a process for continuous production of low fat butter having a substantially better taste, better spreadability and better keeping qualities than the types of low fat butter so far known and which at the same time does not have a "margarine-like" appearance.

It is further the object of the invention to provide an assembly to be used when carrying out the above process, said assembly causing low fat butter with the above characteristics to be produced continuously.

The process according to the present invention is characterised in that the ordinary butter is continuously transferred through a tightly sealed assembly from its inlet to its outlet and that during the process flow through the assembly to its outlet the butter passes through a kneading section where it is preferably heated to between 15 and 25°C and then transferred through a subsequent mixing section during which passages the butter is continuously being admixed with a first substantially airless aqueous solution containing from 2 to 8% by weight lactic acid concentrate and a second substantially airless aqueous solution containing from 4 to 10% by weight milk protein, said percentages by weight being stated in ratios of the prepared butter passing out through the outlet of the assembly. As a result, a low fat butter is continuously produced which has a substantially better taste and spreadability than the types of low fat butter so far known and which has substantially the same keeping qualities and attractive appearance to the consumer as ordinary butter with a fat content of 80-83%. Because the butter is continuously transferred through the kneading section and subsequent mixing section of a tightly sealed assembly while airless aqueous solutions are being admixed, the air content of the low fat butter produced will not be higher than the air content of the ordinary butter on the basis of which the low fat butter is produced. As a result, the good spreadability, long durability and attractive appearance are obtained. The favourable taste of the butter is especially ensured by only using milk based constituents.

According to the invention, the first aqueous solution containing lactic acid concentrate may continuously be added to the butter during its passage through the kneading section of the assembly, whereby a good blending of the solution with the butter is obtained.

Further according to the invention, the second aqueous solution containing milk protein may continuously be added to the butter during its passage through the mixing section of the assembly, whereby a particularly good blending of butter, milk protein and water is obtained.

Moreover according to the invention vegetable oils or fish oils may be added whereby a blended butter product with a lower cholesterol content and an even better spreadability at refrigerator temperature is produced, which is preferred by a group of consumers.

According to the invention the butter may be vacuum treated during its passage through the assembly whereby the air content of the butter is preferably reduced to below 1%. Ordinary butter with an air content higher than about 1% may thereby be used as starting material for the production of low fat butter.

When cold-stored butter is used as starting material for the production of low fat butter, said butter may be admixed with water during its initial passage through the kneading section to reduce the risk of overprocessing which will result in an unctious end product and make the transfer through the assembly more difficult.

According to the invention the milk protein may especially include sodium, potassium and/or calcium caseinate.

Finally according to the invention the passage of the butter through the assembly from the inlet to the outlet may preferably be of a duration of less than one minute.

The assembly for the production of butter with a low fat content by carrying out the process acccording to the invention is characterised in that the assembly comprises transportation means adapted for continuous transfer of butter from the inlet of the assembly to the outlet of the assembly, that the assembly comprises a kneading section and a subsequent mixing section between the inlet and the outlet, that the assembly comprises storage tanks adapted for airless storage of the aqueous solutions, said tanks being connected to the kneading section and/or the mixing section and that the entire assembly is formed as a tightly sealed assembly from the inlet to the outlet. As a result, the production of low fat butter may take place continuously with a substantially shorter production time than so far known and without the butter being mixed with further air during the production. Furthermore, the risk of subsequent infection from airborne bacteria, blastomycetes and hyphomycetes is reduced substantially.

According to the invention the mixing section may comprise one or more subsequent mixing means, substantially in the form of in-line mixers known from butter production per se which make the produced low fat butter particularly homogenous.

According to the invention especially advantageously a connection to a storage tank may extend immediately in front of each mixing means.

According to the invention in a particular advantageous manner the in-line mixers may work at 2000-4000 r.p.m. in contrast to the application with working speeds of 200-1000 r.p.m.

Furthermore according to the invention a connection may extend from the kneading section to a second storage tank whereby a particularly good mixing of the solutions added from the storage tanks is obtained.

According to the invention, the kneading section may advantageously be formed by a continuously working kneading section of a buttermaking assembly known per se, comprising at least one transportation means, preferably in the form of two augers and a subsequent kneading compartment comprising perforated plates and kneading blades.

Furthermore according to the invention the kneading section may comprise two successive kneading compartments with associated transportation means and a vacuum chamber known per se arranged between the first kneading section and the transportation means of the subsequent kneading section, said vacuum chamber being adapted to squeeze out substantially all air from the butter. As a result, the low fat butter may also be produced on the basis of ordinary butter having a high air content of for instance 6-7%.

Finally, according to the invention the perforated plates adapted in the kneading section preferably after the connection of the section with the second storage tank, seen in the flow direction of the butter, may comprise interior, closed pipes, through which pipes a liquid, preferably water with a temperature of around 25°C flows, whereby the butter is heated. The butter is thereby provided with a temperature suitable for the mixing with the aqueous solutions.

### Brief Description of Drawings

The invention is described below with reference to the particularly preferred embodiments and the drawing in which
Fig. 1 is a flow chart according to the process according to the invention for the production of low fat butter,
Fig. 2 shows the assembly according to the invention for the production of low fat butter,
Fig. 3 shows one kneading compartment of the kneading section of the assembly, viewed from the rear in the direction opposite the flow direction of the butter,
Fig. 4 shows the regulating gate of the vacuum chamber used when feeding butter into the vacuum chamber, viewed from the rear in the same direction as the flow direction of the butter, and
Fig. 5 shows one of the in-line mixers of the assembly.

### Best Mode for Carrying Out the Invention

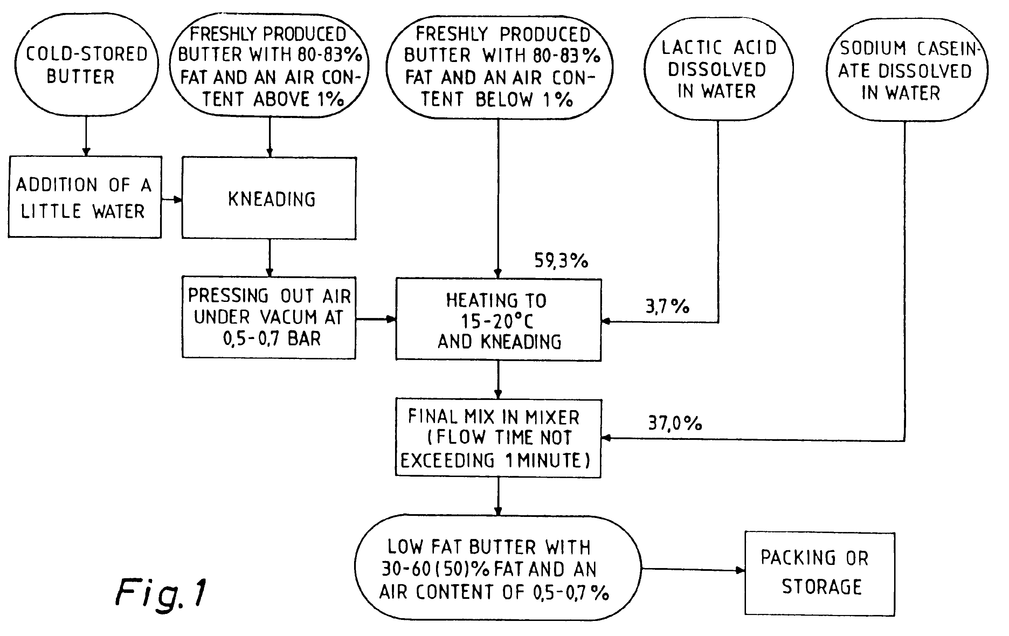

According to the process for the production of low fat butter according to the invention illustrated by means of the flow chart shown in Fig 1, low fat butter is made exclusively on the basis of ordinary butter with a fat content of about 80-83% . The ordinary butter may either be cold-stored butter, freshly produced butter with an air content above 1% (conventionally with an air content between 6 and 7%) or freshly produced butter with an air content below 1%.

If cold-stored butter is used, said butter is firstly softened by means of kneading while adding a little water to prevent overprocessing, and subsequently the butter is subjected to vacuum treatment where substantially all the air of the butter is squeezed out by 0.5 to 0.7 bar low pressure resulting in an air content of the butter of substantially below 1%. If freshly produced butter with an air content above 1% is used as starting material, said butter is firstly kneaded and subsequently subjected to a vacuum treatment. In both cases the same procedure is then followed as when the starting material is freshly produced butter with an air content below 1%.

Freshly produced butter with an air content below 1% is indirectly heated to 15-25°C and kneaded while the butter is continuously being admixed with a substantially airless lactic acid solution in water containing from 2 to 8% lactic acid concentrate. The butter is then mixed while at the same time being admixed with a continuously fed sodium caseinate solution in water containing from 4 to 10% by weight sodium caseinate. Said percentages by weight must be viewed as a ratio of the butter produced passing out through the outlet of the assembly. If 59.3% ordinary butter is mixed with 3.7% lactic acid solution in water and 37.0 sodium caseinate solution in water, a low fat butter product with a fat content of about 50% is produced. The low fat butter is then transferred to a butter silo and further on to a packing assembly where it is packed.

It is thereby possible for the production of low fat butter to take place continuously with a flow time for the butter of below one minute. The low fat butter is thus produced substantially faster and with an improved dosing accuracy of water-protein/butter by means of the process according to the present invention compared to the prior art processes. Because it has an air content below 1% and preferably 0.5 to 0.7%, the low fat butter produced has a spreadability and an appearance comparable to that of ordinary butter with a fat content of 80-83%. As at the same time exclusively milk based constituents are used in the production of the low fat butter, said butter has a particularly good taste, which is actually comparable to the taste of ordinary butter.

By adding and thereby possibly replacing a portion of the butter fat with vegetable oil or fish oil a so-called blended butter product may be produced.

Furtermore, it should be mentioned that it is a very great advantage that because the production of low fat butter takes place continuously, the ordinary butter may be fed continuously directly from a continuously working assembly for the production of the ordinary butter. The entire production of butter from the production of the ordinary butter to the finished low fat butter including the final packing of the butter therefore takes place in a tightly sealed assembly. A low fat butter production with a particularly high hygienic standard is thereby ensured.

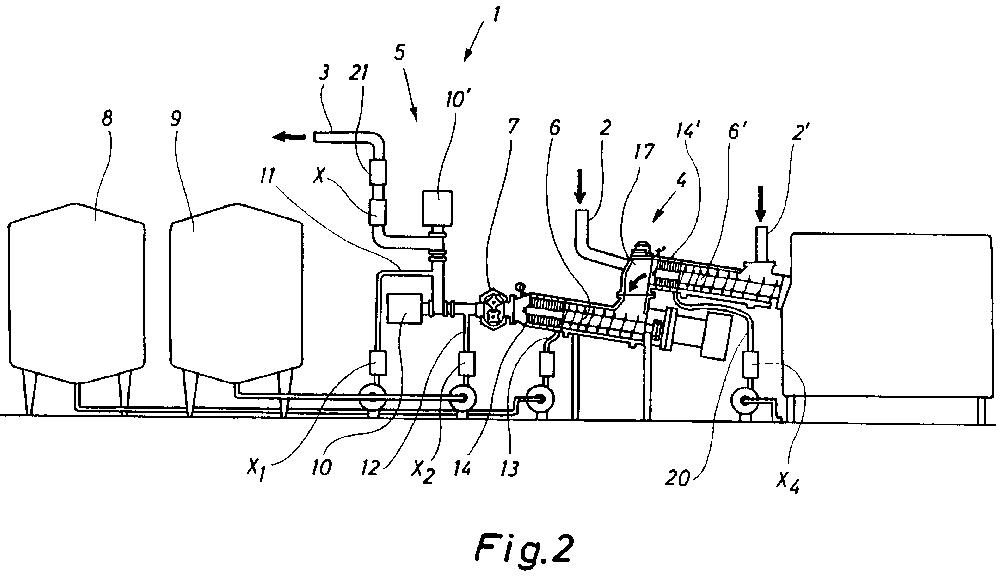

The assembly for the production of low fat butter shown in Fig. 2 comprises an inlet 2, 2′, an outlet 3 and a kneading section with a subsequent mixing section arranged between the inlet 2, 2′ and the outlet 3. The assembly 1 further comprises storage tanks 8, 9 adapted to airless storage of the aqueous solutions. The tank 8 is connected to the kneading section 4, and the tank 9 is connected to the mixing section 5. The entire assembly is formed as a tightly sealed assembly from the inlet 2, 2′ to the outlet 3. The assembly 1 further comprises transportation means 6, 6′, 7 adapted for continuous transfer of the butter from the inlet 2, 2′ of the assembly to the outlet 3 of the assembly.

The kneading section 4 and the transportation means 6; 6′, 7 of the assembly may particularly advantageously be formed by the corresponding parts from a known assembly for the production of ordinary butter with a fat content of 80-83%. The known assembly is manufactured by APV Pasilac and is characterised by a particularly high productivity and a low air content of below 1% of the produced butter.

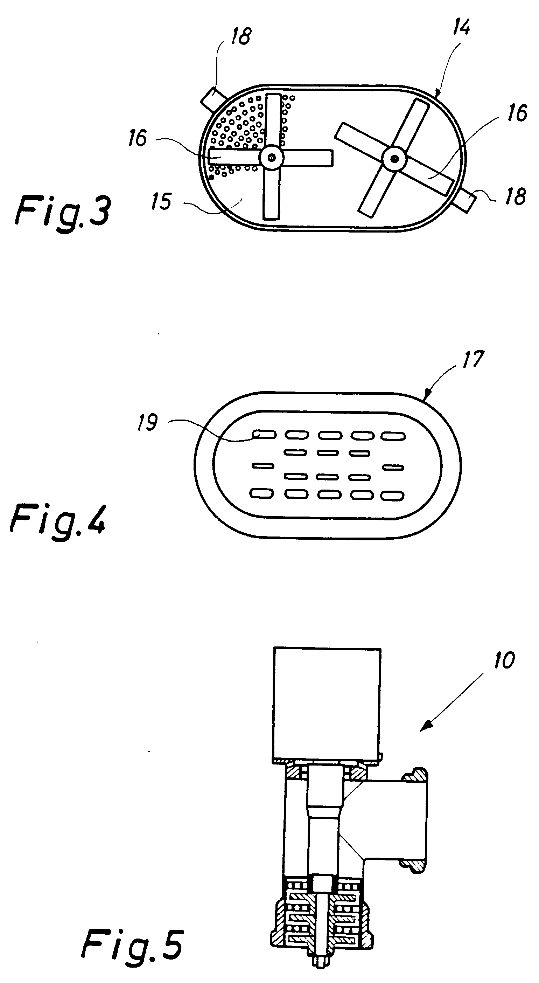

The kneading section 4 comprises two kneading compartments 14, 14′ with associated transportation means 6, 6′. The inlet 2 is arranged in connection with the transportation means 6′ which preferably comprises two augers. The kneading compartment 14 comprises a number of perforated plates 15 placed successively in a conventionally known manner, as shown in Fig. 3, and kneading blades. A vacuum chamber 17 has been adapted between the kneading compartment 14′ and the auger conveyer 6 of the subsequent kneading compartment 14. As shown in Fig. 4, the butter is fed into the vacuum chamber 17 from the kneading section 14′ through a number of elongated openings 19, through which the butter is pressed into the vacuum chamber before passing down into the auger 6. The inlet 2 is mounted on the vacuum chamber 17.

The perforated plates 15 of the kneading compartment 14′ which are adapted in the kneading compartment 14 after the connection 13 of kneading compartment 14′ with the storage tank 8, comprises interior closed pipes 18 through which water flows with a temperature of around 25°C, thereby heating the butter before it is transferred to the butter pump 7 and into the subsequent mixing section 5.

When producing low fat butter on the basis of cold-stored butter or butter with an air content of more than 1%, the butter is fed continuously through the inlet 2′ whereupon it is transported by the auger 6′ up to the kneading compartment 14′. In the kneading compartment 14′ the butter is admixed with a little water through a pipe 20 to prevent overprocessing when cold-stored butter is added through the inlet 2′. The butter is then kneaded while passing through the perforated plates 15 and past the kneading blades 16, whereupon the butter is pressed further out through the elongated openings 19 and into the vacuum chamber 17. In the vacuum chamber is a vacuum of preferably 0.5-0.7 bar. By means of the auger 6 the butter is transported into the kneading section 14 where when passing the first perforated plate 15 of the kneading compartment 14 a aqueous solution containing lactic acid concentrate is continuously being added to the butter through a pipe 13 from a storage tank 8. The butter is transported through the kneading section 14 where the butter and the solution is mixed and the butter is then transferred further by the butter pump 7 through the mixing section 5. When ordinary butter with an air content below 1%, for instance butter produced on an APV Pasilac buttermaking machine where the produced butter preferably has an air content of between 0.5 and 0.7%, is used as starting material, the butter is continuously fed through the inlet 2 and therefore the first kneading in the kneading compartment 14′ and the subsequent vacuum treatment are not necessary. Therefore, in this case there is no vacuum in the vacuum chamber 17.

The mixing section 5 of the assembly comprises a first connection 12 to the storage tank 9, arranged immediately in front of a first in-line mixer 10, and a second connection 11 to the storage tank 9 arranged immediately in front of a subsequent in-line mixer 10′. Subsequently, a H₂O sensor is arranged which measures the water content of the butter before the butter passes out through the outlet, for instance to a subsequent packing machine.

An automatic adjustment of the water content may take place by means of a relational adjustment where the flow meter X shows the quantity of low fat butter and the flow meters X₁, X₂, X₃ and X₄ show quantities of aqueous constituents. The capacity and the mixture are adjusted by means of frequency transformers on the butter pump 7 and on dosing pumps for the four aqueous constituents.

The in-line mixers 10, 10′ may be of a known type, for instance as used in the above mentioned APV Pasilac butter-making machine for final kneading of the butter during its transportation from a butter silo to the packing assembly.

The butter is transported through the mixing section 5 by means of the butter pump 7 where it is continuously admixed with a portion of the sodium caseinate solution through the connection 12, whereupon the butter is mixed with this portion of the solution in the in-line mixer 10 and transported further, whereupon the butter is admixed with a second portion of the sodium caseinate solution from the tank 9. The last mixing of the solution with the large water content and the butter takes place in the in-line mixer 10′, whereupon the butter is transported through the H₂O sensor and the flow meter to the outlet 3. It has been found that when using the above mentioned known types of in-line mixers 10, 10′ a particularly good mixing of the butter with the aqueous solutions with the large amounts of water is obtained. This is especially due to the mixers working at 2000-4000 r.p.m. in contrast to 200-1000 r.p.m. in the known application and that the mixing takes place in a closed system without access to air.

It has been found that low fat butter with a fat content as low as 30% can be produced in the assembly and it has surprisingly been found that the high water content, conventionally around 50%, is bound in the butter in very small particles of around 10 »m without any observations of free water on the surface of the butter. It has further been found that low fat butter with a particullarly low air content of 0.5-0.7% is produced under all production conditions. As a result, a low fat butter with an extremely good spreadability and an appearance hardly distinguishable from that of ordinary butter is produced.

The following modifications are also possible: The lactic acid solution and milk protein solution may be added in arbitrary order or simultaneously and the milk protein may for instance be comprised by many different caseinates. The assembly may also comprise several connections to tanks and thereby also many different mixing means. The kneading section may also comprise other kneading devices than the perforeated plates and kneading blades mentioned.

## Claims

1. A process for the production of butter with a low fat content on the basis of ordinary butter preferably having a fat content of 80-83% and prepared exclusively on the basis of milk based constituents **characterised** in that the ordinary butter is continuously transferred through a tightly sealed assembly (1) from its inlet (2, 2′) to its outlet (3) and that during the process flow through the assembly to its outlet (3) the butter passes through a kneading section (4) where it is preferably heated to between 15 and 25°C and then transferred through a subsequent mixing section (5) during which passages the butter is continuously being admixed with a first substantially airless aqueous solution containing from about 2 to about 8% by weight lactic acid concentrate and a second substantially airless aqueous solution containing from about 4 to about 10% by weight milk protein, said percentages by weight being stated in ratios of the prepared butter passing out through the outlet (3) of the assembly (1).

2. A process as claimed in claim 1, **characterised** in that the first aqueous solution containing lactic acid concentrate is continuously added to the butter during its passage through the kneading section of the assembly.

3. A process as claimed in claim 1 or 2, **characterised** in that the second aqueous solution containing milk protein is continously added to the butter during its passage through the mixing section (5) of the assembly (1).

4. Alternative of the process as described in Claims 1-3 additionally being **characterised** in that vegetable oils or fish oils are furthermore added.

5. A process as claimed in one or more of the claims 1 to 4, **characterised** in that during its passage through the assembly (1) the butter is vacuum treated in such a manner that the air content of the butter is preferably reduced to below 1%.

6. A process as claimed in one or more of the claims 1 to 5, **characterised** in that during its initial passage through the kneading section (4) water is added to the butter to reduce the risk of overprocessing.

7. A process as claimed in one or more of the claims 1 to 6, **characterised** in that the milk protein preferably includes sodium, potassium and/or calcium caseinate.

8. A process as claimed in one or more of the claims 1 to 7, **characterised** in that the passage of the butter through the assembly (1) from the inlet (2, 2′) to the outlet (3) is preferably of a duration of less than 1 minute.

9. Assembly for the production of butter with a low fat content by means of the process claimed in claims 1 to 8, **characterised** in that the assembly (1) comprises transportation means (6, 6′, 7) adapted for continuous transfer of butter from the inlet (2,2′) of the assembly (1) to the outlet (3) of the assembly (1), that the assembly (1) comprises a kneading section (4) and a subsequent mixing section (5) between the inlet (2, 2′) and the outlet (3), that the assembly (1) comprises storage tanks (8, 9) adapted for airless storage of the aqueous solutions, said tanks (8, 9) being connected to the kneading section (4) and/or the mixing section (5) and that the entire assembly (1) is formed as a tightly sealed assembly from the inlet (2, 2′) to the outlet (3).

10. An assembly as claimed in claim 9, **characterised** in that the mixing section (5) comprises one or more successive mixing means, substantially in the form of in-line mixers (10,10′) known per se.

11. An assembly as claimed in claim 10, **characterised** in that a connection (11, 12) extends to a storage tank (9) immediately in front of each mixing means (10, 10′).

12. An assembly as claimed in claim 10, **characterised** in that the in-line mixers (10) are working at 2000-4000 r.p.m. in contrast to their known application with working speeds of 200-1000 r.p.m.

13. An assembly as claimed in one or more of the claims 9 to 12, **characterised** in that a connection (13) extends from the kneading section (4) to a second storage tank (8).

14. An assembly as claimed in one or more of the claims 9 to 13, **characterised** in that the kneading section (4) is formed by a continuously working kneading section (4) of a buttermaking assembly known per se, comprising at least one transportation means, preferably in the form of two augers (6) and a subsequent kneading section (14) comprising perforated plates (15) and kneading blades (16).

15. An assembly as claimed in claim 14 and/or more of the claims 9 to 13, **characterised** in that the kneading section (4) comprises two successive kneading sections (14′ and 14) with associated transportation means (6′, 6) and a vacuum chamber (17) known per se arranged between the first kneading compartment (14′) and the transportation means of the subsequent kneading compartment (14), said vacuum chamber being adapted to squeeze out substantially all air from the butter.

16. An assembly as claimed in claim 13 or 14 or one or more of the claims 9 to 12 and 15, **characterised** in that the perforated plates (15) adapted in the kneading section (14) preferably after the connection (13) of the section with the second storage tank (8), seen in the flow direction of the butter, comprise interior, closed pipes (18), through which pipes flows a liquid, preferably water with a temperature of around 25°C, whereby the butter is heated.

## Patentansprüche

1. Verfahren zur Herstellung von Butter mit niedrigem Fettgehalt auf der Grundlage von gewöhnlicher Butter, die vorzugsweise einen Fettgehalt von 80 bis 83 % aufweist und ausschließlich aus Bestandteilen auf Milchbasis hergestellt ist, dadurch gekennzeichnet, daß die gewöhnliche Butter kontinuierlich durch eine dicht verschlossene Vorrichtung (1) von ihrem Einlaß (2,2′) zu ihrem Auslaß (3) geführt wird und während des Bearbeitungsflusses durch die Vorrichtung zu deren Ausgang (3) die Butter durch einen Knetabschnitt (4) geführt wird, wo sie vorzugsweise auf zwischen 15 und 25°C erwärmt wird, und dann durch einen nachfolgenden Mischabschnitt (5) geführt wird, wobei während des Durchlaufens dieses Abschnitts die Butter kontinuierlich mit einer ersten im wesentlichen luftfreien wäßrigen Lösung, die etwa 2 bis etwa 8 Gew.% Milchsäurekonzentrat enthält, und einer zweiten im wesentlichen luftfreien wäßrigen Lösung, die etwa 4 bis etwa 10 Gew.% Milchprotein enthält, gemischt wird, wobei sich die Gewichtsprozentsätze auf die Verhältnisse der hergestellten Butter beziehen, die durch den Auslaß (3) die Vorrichtung (1) verläßt.

2. Verfahren nach Anspruch 1, dadurch gekennzeichnet, daß die erste wäßrige Lösung, die Milchsäurekonzentrat enthält, der Butter kontinuierlich zugesetzt wird, während sie den Knetabschnitt der Vorrichtung durchläuft.

3. Verfahren nach Anspruch 1 oder 2, dadurch gekennzeichnet, daß die zweite wäßrige Lösung, die Milchprotein enthält, der Butter kontinuierlich zugesetzt wird, während sie den Mischabschnitt (5) der Vorrichtung (1) durchläuft.

4. Alternative des Verfahrens gemäß den Ansprüchen 1 bis 3, zusätzlich dadurch gekennzeichnet, daß außerdem Pflanzenöle oder Fischöle zugesetzt werden.

5. Verfahren nach einem oder mehreren der Ansprüche 1 bis 4, dadurch gekennzeichnet, daß die Butter, während sie die Vorrichtung (1) durchläuft, in einer solchen Weise vakuumbehandelt wird, daß der Luftgehalt der Butter vorzugsweise auf unter 1 % verringert wird.

6. Verfahren nach einem oder mehreren der Ansprüche 1 bis 5, dadurch gekennzeichnet, daß der Butter Wasser zugesetzt wird, während sie am Anfang den Knetabschnitt (4) durchläuft, um das Risiko einer Überbearbeitung zu verringern.

7. Verfahren nach einem oder mehreren der Ansprüche 1 bis 6, dadurch gekennzeichnet, daß das Milchprotein vorzugsweise die Natrium-, Kalium- und/oder Calciumsalze des Caseins einschließt.

8. Verfahren nach einem oder mehreren der Ansprüche 1 bis 7, dadurch gekennzeichnet, daß die Butter die Vorrichtung (1) vom Einlaß (2,2′) bis zum Auslaß (3) vorzugsweise in einer Dauer von weniger als 1 Minute durchläuft.

9. Vorrichtung zur Herstellung von Butter mit einem niedrigen Fettgehalt nach dem Verfahren gemäß einem der Ansprüche 1 bis 8, dadurch gekennzeichnet, daß die Vorrichtung (1) Transporteinrichtungen (6,6′,7) umfaßt, die zur kontinuierlichen Überführung von Butter vom Einlaß (2,2′) der Vorrichtung (1) bis zum Auslaß (3) der Vorrichtung (3) vorgesehen sind, daß die Vorrichtung (1) einen Knetabschnitt (4) und einen nachfolgenden Mischabschnitt (5) zwischen dem Einlaß (2,2′) und dem Auslaß (3) umfaßt, daß die Vorrichtung (1) Vorratsbehälter (8,9) umfaßt, die zur luftfreien Lagerung der wäßrigen Lösungen vorgesehen sind, wobei die Behälter (8,9) mit dem Knetabschnitt (4) und/oder dem Mischabschnitt (5) verbunden sind, und daß die gesamte Vorrichtung (1) vom Einlaß (2,2′) bis zum Auslaß (3) als dicht verschlossene Vorrichtung ausgebildet ist.

10. Vorrichtung nach Anspruch 9, dadurch gekennzeichnet, daß der Mischabschnitt (5) einen oder mehrere aufeinanderfolgende Mischeinrichtungen umfaßt, im wesentlichen in Form von an sich bekannten in der Leitung montierten Mischern (10,10′).

11. Vorrichtung nach Anspruch 10, dadurch gekennzeichnet, daß sich eine Verbindung (11,12) zu einem Lagerungsbehälter (9) unmittelbar vor jeder Mischeinrichtung (10,10′) erstreckt.

12. Vorrichtung nach Anspruch 10, dadurch gekennzeichnet, daß die in den Leitungen liegenden Mischer (10) im Gegensatz zu ihrer bekannten Verwendung mit Arbeitsgeschwindigkeiten von 200 bis 1000 UpM mit 2000 bis 4000 UpM arbeiten.

13. Vorrichtung nach einem oder mehreren der Ansprüche 9 bis 12, dadurch gekennzeichnet, daß sich eine Verbindung (13) vom Knetabschnitt (4) zu einem zweiten Lagerungsbehälter (8) erstreckt.

14. Vorrichtung nach einem oder mehreren der Ansprüche 9 bis 13, dadurch gekennzeichnet, daß der Knetabschnitt (4) durch einen kontinuierlich arbeitenden Knetabschnitt (4) einer an sich bekannten Butterherstellungsvorrichtung gebildet wird, die mindestens eine Transporteinrichtung, vorzugsweise in Form zweier Schneckenpressen (6), und einen nachfolgenden Knetabschnitt (14) umfaßt, der gelochte Platten (15) und Knetschaufeln (16) umfaßt.

15. Vorrichtung nach Anspruch 14 und/oder mehreren der Ansprüche 9 bis 13, dadurch gekennzeichnet, daß der Knetabschnitt (4) zwei aufeinanderfolgende Knetabschnitte (14 und 14′) mit dazugehörigen, an sich bekannten Transporteinrichtungen (6,6′) und einer an sich bekannten Vakuumkammer (17) umfaßt, die zwischen der ersten Knetabteilung (14′) und den Transporteinrichtungen der nachfolgenden Knetabteilung (14) angeordnet ist, wobei die Vakuumkammer so vorgesehen ist, daß sie im wesentlichen die gesamte Luft aus der Butter herausdrückt.

16. Vorrichtung nach Anspruch 13 oder 14 oder einem oder mehreren der Ansprüche 9 bis 12 und 15, dadurch gekennzeichnet, daß die in dem Knetabschnitt (14) vorzugsweise nach der Verbindung (13) des Abschnittes mit dem zweiten Lagerungstank (8) in Fließrichtung der Butter gesehen vorgesehenen gelochten Platten (15) innere geschlossene Rohre (18) bilden, wobei durch die Rohre eine Flüssigkeit fließt, vorzugsweise Wasser mit einer Temperatur um etwa 25°C, wodurch die Butter erwärmt wird.

## Revendications

1. Procédé de fabrication de beurre à faible teneur en matière grasse en prenant pour base le beurre ordinaire ayant de préférence une teneur en matière grasse de 80-83 % et préparé exclusivement à partir de composants d'origine laitière, caractérisé en ce que le beurre ordinaire est transféré de façon continue d'un bout à l'autre d'un montage (1) scellé hermétiquement de son entrée (2, 2′) à sa sortie (3) et en ce que, pendant la circulation d'un bout à l'autre du montage jusqu'à sa sortie (3), le beurre passe par une section de malaxage (4) où il est chauffé préférablement entre 15 et 25°C, puis est transféré dans une section de mélange (5) placé après, passages pendant lesquels le beurre est continuellement mélangé avec une première solution aqueuse sensiblement sans air contenant d'environ 2 à environ 8 % en masse de concentré d'acide lactique et avec une deuxième solution aqueuse sensiblement sans air contenant d'environ 4 à environ 10 % en masse de protéine du lait, lesdits pourcentages en masse étant établis en rapports du beurre préparé sortant par la sortie (3) du montage (1).

2. Procédé selon la revendication 1, caractérisé en ce que la première solution aqueuse contenant le concentré d'acide lactique est ajoutée continuellement au beurre pendant son passage dans la section de malaxage du montage.

3. Procédé selon la revendication 1 ou 2, caractérisé en ce que la deuxième solution aqueuse contenant la protéine du lait est ajoutée continuellement au beurre pendant son passage par la section de mélange (5) du montage (1).

4. Alternative du procédé tel que décrit dans les revendications 1 à 3 étant en sus caractérisée en ce que des huiles végétales ou des huiles de poisson sont de plus ajoutées.

5. Procédé selon une ou plusieurs des revendications 1 à 4, caractérisé en ce que le beurre, pendant son passage d'un bout à l'autre du montage (1), est traité dans le vide de telle sorte que la teneur en air du beurre est de préférence réduite à moins de 1 %.

6. Procédé selon une ou plusieurs des revendications 1 à 5, caractérisé en ce qu'on ajoute de l'eau au beurre pendant son passage initial par la section de malaxage (4) pour réduire le risque de surtransformation.

7. Procédé selon une ou plusieurs des revendications 1 à 6, caractérisé en ce que la protéine du lait de préférence inclut le caséinate de sodium, de potassium et/ou de calcium.

8. Procédé selon une ou plusieurs des revendications 1 à 7, caractérisé en ce que le passage du beurre d'un bout à l'autre du montage (1) de l'entrée (2, 2′) à la sortie (3) est de préférence d'une durée inférieure à 1 min.

9. Montage de fabrication de beurre à faible teneur en matière grasse au moyen du procédé selon les revendications 1 à 8, caractérisé en ce que le montage (1) comporte des moyens de transport (6, 6′, 7) adaptés pour le transfert continu du beurre de l'entrée (2, 2′) du montage (1) à la sortie (3) du montage (1), en ce que le montage (1) comporte entre l'entrée (2, 2′) et la sortie (3) une section de malaxage (4) et une section de mélange (5) placée après, en ce que le montage (1) comporte des réservoirs de stockage (8, 9) adaptés pour un stockage sans air des solutions aqueuses, lesdits réservoirs (8, 9) étant connectés à la section de malaxage (4) et/ou à la section de mélange (5), et en ce que le montage entier (1) est conçu comme un montage hermétiquement scellé de l'entrée (2, 2′) à la sortie (3).

10. Montage selon la revendication 9, caractérisé en ce que la section de mélange (5) comporte un ou plusieurs moyens de mélange successifs, sensiblement sous la forme de mélangeur en ligne (10, 10′) connus en soi.

11. Montage selon la revendication 10, caractérisé en ce qu'une connexion (11, 12) s'étend jusqu'à un réservoir de stockage (9) immédiatement devant chaque moyen de mélange (10, 10′).

12. Montage selon la revendication 10, caractérisé en ce que les mélangeurs en ligne (10) opèrent à 2000-4000 tr/min à l'opposé de leur application connue avec des vitesses de fonctionnement de 200-1000 tr/min.

13. Montage selon une ou plusieurs des revendications 9 à 12, caractérisé en ce qu'une connexion (13) s'étend de la section de malaxage (4) à un deuxième réservoir de stockage (8).

14. Montage selon une ou plusieurs des revendications 9 à 13, caractérisé en ce que la section de malaxage (4) est formée par une section de malaxage (4) opérant continuellement d'un montage de fabrication de beurre connu en soi, comportant au moins un moyen de transport, de préférence sous forme de deux vis (6) et une section de malaxage (14) placée après comportant des plaques perforées (15) et des lames de malaxage (16).

15. Montage selon la revendication 14 et/ou plusieurs des revendications 9 à 13, caractérisé en ce que la section de malaxage (4) comporte deux sections de malaxage successives (14′ et 14) avec des moyens de transport associés (6′, 6) et une chambre à vide (17) connue en soi placée entre le premier compartiment de malaxage (14′) et le moyen de transport du compartiment de malaxage (14) placé après, ladite chambre à vide étant adaptée pour exprimer sensiblement tout l'air du beurre.

16. Montage selon la revendication 13 ou 14 ou une ou plusieurs des revendications 9 à 12 et 15, caractérisé en ce que les plaques perforées (15), adaptées dans la section de malaxage (14) de préférence après la connexion (13) de la section avec le deuxième réservoir de stockage (8), vues dans la direction d'écoulement du beurre, comportent des tuyaux fermés intérieurs (18), par lesquels tuyaux s'écoule un liquide, de préférence de l'eau à une température d'environ 25°C, de sorte que le beurre est chauffé.
